# EUROPÄISCHE PATENTSCHRIFT

(11) **EP 2 647 808 B1**
(45) Veröffentlichungstag und Bekanntmachung des Hinweises auf die Patenterteilung: **09.12.2015**
(21) Anmeldenummer: 12163331.7
(22) Anmeldetag: 05.04.2012
(51) Int. Cl.: F02B 37/22, F02B 37/02

(54) **Abgastrakt für einen Verbrennungsmotor**
Exhaust gas tract for an internal combustion engine
Ligne d'échappement pour un moteur à combustion

(43) Veröffentlichungstag der Anmeldung: 09.10.2013
(73) Patentinhaber: Universität Stuttgart, 70174 Stuttgart (DE)
(72) Erfinder: Challand, Sebastian, 70435 Stuttgart (DE); Dirschauer, Eckart, 70435 Stuttgart (DE)
(74) Vertreter: Wolf, Michael

(56) Entgegenhaltungen:
- DE-A1- 19 918 232
- DE-A1-102008 052 088
- DE-B- 1 004 861
- DE-C1- 3 439 999
- FR-A1- 2 844 552

## Beschreibung

Die Erfindung betrifft einen Abgastrakt für einen Verbrennungsmotor gemäß dem Oberbegriff des Patentanspruchs 1.

Ein Abgastrakt für einen Verbrennungsmotor der eingangs genannten Art ist nach der DE 10 2009 050 952 A1 bekannt. Dieser besteht mit Verweis auf Figur 3 dieser Schrift und bezogen auf einen Zylinder des Verbrennungsmotors bzw. Hubkolbenmotors aus mindestens einer ersten und einer zweiten Abgasanschlussschnittstelle zur fluidisch getrennten Abfuhr von bei einem Verbrennungsprozess entstehendem Abgas aus einem Verbrennungsraum (Brennkammer) des Verbrennungsmotors und einem mindestens zweiflutig ausgebildeten Abgasturbolader, der zur fluidisch getrennten Zufuhr der beim Verbrennungsprozess entstehenden Abgase mindestens eine erste und eine zweite Zufuhranschlussschnittstelle aufweist, wobei ein erster Verbindungskanal zur fluidischen Verbindung der ersten Abgasanschlussschnittstelle mit der ersten Zufuhranschlussschnittstelle und ein zweiter Verbindungskanal zur fluidischen Verbindung der zweiten Abgasanschlussschnittstelle mit der zweiten Zufuhranschlussschnittstelle ausgebildet ist. Bei der Lösung nach Figur 3 der DE 10 2009 050 952 A1 sind vier Verbrennungsräume (Zylinder) vorgesehen, wobei außerdem jeder Verbrennungsraum mit einer ersten und mit einer zweiten Abgasanschlussschnittstelle versehen ist. An diese Abgasanschlussschnittstellen schließen sich Verbindungskanäle an, die mit genau einer ersten und genau einer zweiten Zufuhranschlussschnittstelle des Abgasturboladers verbunden sind. Die Verbindung von insgesamt acht Abgasanschlussschnittstellen am Verbrennungsmotor mit insgesamt zwei Zufuhranschlussschnittstellen am Abgasturbolader kommt dabei dadurch zustande, dass jeweils vier Verbindungskanäle der ersten bzw. zweiten Abgasanschlussschnittstelle vor dem Erreichen der ersten bzw. zweiten Zufuhranschlussschnittstelle zusammengeführt ausgebildet sind.

Der Erfindung liegt die Aufgabe zugrunde, einen Abgastrakt für einen Verbrennungsmotor der eingangs genannten Art zu verbessern.

Diese Aufgabe ist mit einem Abgastrakt für einen Verbrennungsmotor der eingangs genannten Art durch die im Kennzeichen des Patentanspruchs 1 aufgeführten Merkmale gelöst.

Nach der Erfindung ist also vorgesehen, dass mindestens einer der Verbindungskanäle mindestens teilweise mittels eines Verschlusselements verschließbar ausgebildet ist, wobei bei einer Anzahl von n Verbrennungsräumen mindestens 2*n Verbindungskanäle vorgesehen sind.

Mit anderen Worten ist erfindungsgemäß vorgesehen, die Beaufschlagung des Abgasturboladers über das Öffnen und Schließen der Verbindungskanäle zu beeinflussen. Diese Maßgabe ermöglicht es, den Abgasturbolader bei unterschiedlichen Abgasmassenströmen und damit bei unterschiedlichen Drehzahlen des Verbrennungs- bzw. Hubkolbenmotors mindestens zweistufig zu betreiben, wobei nach der Erfindung, was noch genauer erläutert wird, auch mehr als zwei Abgasanschlussschnittstellen, Verbindungskanäle, Zufuhranschlussschnittstellen pro Zylinder vorgesehen sein können. Sind beispielsweise drei Verbindungskanäle pro Zylinder vorgesehen, kann der Abgasturbolader bei niedrigem Abgasmassenstrom (also bei niedriger Drehzahl) über nur eine Zufuhranschlussschnittstelle pro Zylinder, bei mittlerem Abgasmassenstrom (also bei mittlerer Drehzahl) über zwei Zufuhranschlussschnittstellen pro Zylinder und bei hohem Abgasmassenstrom (also hoher Drehzahl) über drei Zufuhranschlussschnittstelle pro Zylinder beaufschlagt werden. Die Beaufschlagung des Abgasturboladers erfolgt somit in Abhängigkeit des Abgasmassenstroms, wobei die beschriebene Stufigkeit umso gleichmäßiger wird, je mehr Verbindungskanäle pro Zylinder insgesamt vorgesehen werden. Orientiert an den typischer Weise bei einem Verbrennungsmotor üblichen Raumverhältnissen sind zwei Verbindungskanäle pro Zylinder das Minimum zur Realisierung der erfindungsgemäßen Lösung, drei Verbindungskanäle pro Zylinder ein vernünftiges Mittelmaß und vier Verbindungskanäle pro Zylinder sicher schon im Grenzbereich zwischen Aufwand und Nutzen.

Nochmals kurz zusammengefasst gilt für die erfindungsgemäße Lösung, dass mindestens zwei Verbindungskanäle pro Zylinder vorgesehen sein müssen, dass mindestens einer der Verbindungskanäle pro Zylinder (mindestens teilweise) verschließbar ausgebildet sein muss und dass der Abgasturbolader mindestens zweimal soviele Zufuhranschlussschnittstellen (auch Fluten genannt) aufweist, wie der Verbrennungsmotor insgesamt Zylinder hat.

Der im Patentanspruch 1 verwendete Begriff "Abgasanschlussschnittstelle" umfasst dabei mindestens die folgenden Optionen:
Bei einem Verbrennungsmotor mit einem Auslassventil pro Zylinder ist diesem Auslassventil ein (zum Beispiel zum Abgastrakt gehörender) Strömungsteiler nachgeschaltet, der den Abgasmassenstrom in mindestens zwei Teilströme aufteilt. Die Abgasanschlussschnittstellen befinden sich dabei genau an der Stelle der Aufteilung.
Bei einem Verbrennungsmotor mit zwei (oder mehr) Auslassventilen pro Zylinder sind die Abgasanschlussschnittstellen praktisch direkt am Zylinderkopf des Verbrennungsmotors angeordnet, da kein weiterer Strömungsteiler erforderlich ist, um den Abgasmassenstrom auf zwei (oder mehr) Abgasanschlussschnittstellen zu verteilen.

Im Falle, dass zwar zwei Auslassventile pro Zylinder vorhanden sind, gleichzeitig aber drei Abgasanschlussschnittstellen vorgesehen sein sollen, wäre wieder ein Strömungsteiler vorzusehen, der die drei Abgasanschlussschnittstellen auf Basis von zwei Auslassventilen bereit stellt.

Die im Kennzeichen des Patentanspruchs 1 definierte Maßgabe "mindestens teilweise" berücksichtigt die Option, dass die Beaufschlagung des Abgasturboladers zwischen den einzelnen Stufen bei Bedarf mittels des Verschlusselements auch kontinuierlich gesteigert bzw. verringert werden kann.

Ferner bedeutet die Maßgabe der Verschließbarkeit eines Verbindungskanals lediglich, dass über diesen Verbindungskanal im vollständig geschlossenen Zustand kein Abgas zum Abgasturbolader geführt werden kann. Dass das Abgas zum Beispiel am Abgasturbolader vorbei zum eigentlichen Auspuff des Verbrennungsmotors geleitet (gebypassed) wird, ist durch diese Maßgabe nicht ausgeschlossen.

Die erfindungsgemäße Lösung hat den Vorteil, dass die Impulsenergie des Abgases besonders gut ausgenutzt werden kann, da die Beaufschlagung des Abgasturboladers in Abhängigkeit vom tatsächlichen Abgasmassenstrom erfolgt. Dabei sind, was unten noch genauer erläutert wird, innerhalb des Abgasturboladers feste Anströmwinkel (ohne zusätzliche Leitschaufeln oder dergleichen) für das Abgas auf das Laufrad vorgesehen, d. h. die Geometrie des Gehäuses des Abgasturbolader kann (was ebenfalls unten genauer erläutert ist) besonders einfach gestaltet sein. Darüber hinaus erfolgt das Öffnen und Schließen der Verbindungskanäle besonders bevorzugt mit Ventilen oder dergleichen, die außerhalb des Abgasturboladers und damit außerhalb des thermisch höchst belasteten Bereichs angeordnet sind.

Andere vorteilhafte Weiterbildungen des erfindungsgemäßen Abgastraktes für einen Verbrennungsmotor ergeben sich aus den abhängigen Patentansprüchen.

Der Vollständigkeit halber wird noch auf die DE 10 2007 037 540 A1 verwiesen. Bei dieser Lösung ist zwischen dem Verbrennungsmotor und dem Abgasturbolader in der (einzigen!) Verbindungsleitung eine röhrenförmige Düse mit veränderlicher Düsengeometrie angeordnet. Der verstellbare Austrittsquerschnitt der Düse gestattet es angeblich, bei kleinen Abgasmassenströmen, zum Beispiel bei Teillast oder bei niedrigen Drehzahlen der Brennkraftmaschine, durch Verengung des Düsenquerschnitts den Anteil des kinetischen Drucks der Abgas gegenüber dem Anteil des statischen Drucks zu erhöhen, während es umgekehrt bei großen Abgasmassenströmen, zum Beispiel im Volllastbetrieb oder bei hohen Drehzahlen der Brennkraftmaschine, möglich ist, durch Erweiterung des Austrittsquerschnitts, für einen geringen Druckverlust im Bereich der Düse zu sorgen. Anmelderseitig wird allerdings davon ausgegangen, dass der angestrebte Düseneffekt, noch bevor die Strömung das Laufrad des Abgasturboladers erreicht hat, dissipiert ist, sprich letztlich diese Anordnung nur zu einer Entrophieerhöhung über der Stufe führt.

Abschließend wird noch auf die thematisch weiter abliegende DE 10 04 861 A1 hingewiesen.

Der erfindungsgemäße Abgastrakt für einen Verbrennungsmotor einschließlich seiner vorteilhaften Weiterbildungen gemäß der abhängigen Patentansprüche wird nachfolgend anhand der zeichnerischen Darstellung verschiedener Ausführungsbeispiele näher erläutert.

Es zeigt schematisch
- Figur 1: den erfindungsgemäßen Abgastrakt für einen Einzylinder-Verbrennungsmotor mit zwei Auslasskanälen, einem Verschlusselement und einem zweiflutigen Abgasturbolader (nur teilweise dargestellt);
- Figur 2: einen Einzylinder-Verbrennungsmotor mit einem Auslasskanal und einem Adapterelement (Strömungsteiler) zur Ausbildung einer ersten und einer zweiten Abgasanschlussschnittstelle; und
- Figur 3: den erfindungsgemäßen Abgastrakt für einen Vierzylinder-Verbrennungsmotor mit drei Verbindungskanälen pro Zylinder, insgesamt acht Verschlusselemente und ein zwölfflutiger Abgasturbolader.

Alle Ausführungsformen des in den Figuren dargestellten Abgastraktes für einen Verbrennungsmotor bestehen aus mindestens einer ersten und einer zweiten Abgasanschlussschnittstelle 1.1, 1.2 zur fluidisch getrennten Abfuhr von bei einem Verbrennungsprozess entstehendem Abgas aus einem Verbrennungsraum des Verbrennungsmotors und einem mindestens zweiflutig ausgebildeten Abgasturbolader 2, der zur fluidisch getrennten Zufuhr der beim Verbrennungsprozess entstehenden Abgase mindestens eine erste und eine zweite Zufuhranschlussschnittstelle 3.1, 3.2 aufweist, wobei ein erster Verbindungskanal 4.1 zur fluidischen Verbindung der ersten Abgasanschlussschnittstelle 1.1 mit der ersten Zufuhranschlussschnittstelle 3.1 und ein zweiter Verbindungskanal 4.2 zur fluidischen Verbindung der zweiten Abgasanschlussschnittstelle 1.2 mit der zweiten Zufuhranschlussschnittstelle 3.2 ausgebildet ist.

Wesentlich für den erfindungsgemäßen Abgastrakt ist nun, dass mindestens einer der Verbindungskanäle 4.1, 4.2 mindestens teilweise mittels eines Verschlusselements 5 verschließbar ausgebildet ist, wobei bei einer Anzahl von n Verbrennungsräumen mindestens 2*n Verbindungskanäle 4.1, 4.2 vorgesehen sind. Mit Blick auf die hohe Temperaturbelastung ist dabei besonders bevorzugt vorgesehen, dass das Verschlusselement 5 als in den Verbindungskanal 4.1, 4.2 einführbarer Schieber ausgebildet ist.

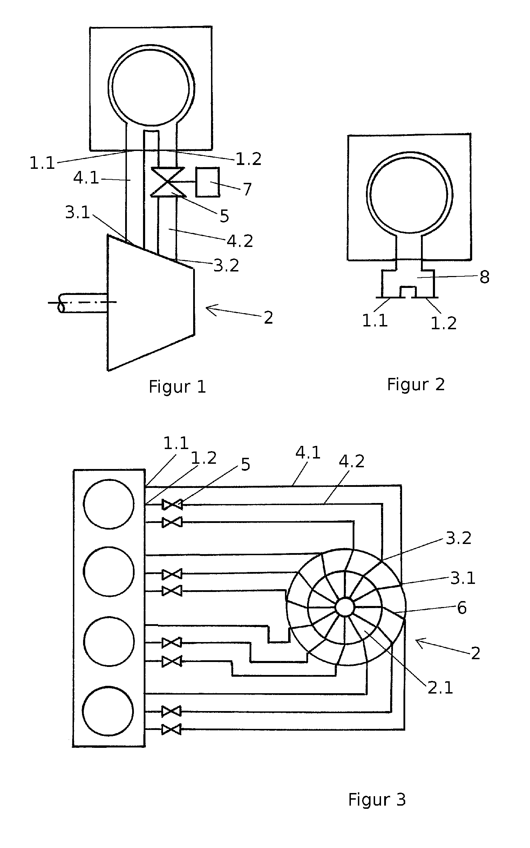

In Figur 1 ist zunächst zum leichteren Verständnis der Erfindung eine Ausführungsform eines Einzylinder-Verbrennungsmotors schematisch dargestellt, der, zum Beispiel weil neben zwei Einlassventilen auch zwei Auslassventile vorgesehen sind (Stichwort: Vier Ventile pro Zylinder), am Zylinderkopf zwei Auslassöffnungen aufweist. An diese beiden Auslassöffnungen, die in diesem Fall die Abgasanschlussschnittstellen 1.1, 1.2 bilden, schließen sich insgesamt zwei Verbindungskanäle 4.1, 4.2 an, die wiederum mit den beiden Zufuhranschlussschnittstellen 3.1, 3.2 des in diesem Fall zweiflutig ausgebildeten Abgasturboladers 2 verbunden sind. Einer der beiden Verbindungskanäle 4.2 ist mit dem erfindungsgemäßen Verschlusselement 5 versehen, das seinerseits über ein Stellglied 7 betätigbar ausgebildet ist. Das Verschlusselement 5 kann (bei allen Ausführungsformen) wahlweise komplett geöffnet, komplett geschlossen, aber auch in jeder Zwischenstellung positioniert sein. Hierzu ist jedes vorzugsweise mit einem Stellglied 7 versehene Verschlusselement 5 mit einer übergeordneten (nicht extra dargestellten) Regeleinheit verbunden ausgebildet.

In Figur 2 ist ebenfalls ein Einzylinder-Verbrennungsmotor schematisch dargestellt; dieser weist allerdings an seinem Zylinderkopf lediglich eine Auslassöffnung auf. Um trotzdem, also wenn die erste und zweite Abgasanschlussschnittstelle 1.1, 1.2 nicht direkt mit entsprechenden außen am Zylinderkopf des Verbrennungsmotors angeordneten Auslassöffnungen verbunden ausgebildet sein kann, mindestens zwei Abgasanschlussschnittstellen 1.1, 1.2 zur Verfügung zu haben, kann erfindungsgemäß ein Adapterelement 8 vorgesehen sein, das im dargestellten Ausführungsbeispiel die Auslassöffnung mit zwei Abgasanschlussschnittstellen 1.1, 1.2 verbindet. Alternativ (nicht extra dargestellt) könnte das Adapterelement 8 die Auslassöffnung aber auch mit drei Abgasanschlussschnittstellen verbinden. Weiterhin ist auch zum Beispiel ein Adapterelement 8 möglich, das zwei Auslassöffnungen mit drei Abgasanschlussschnittstellen verbindet.

In Figur 3 ist eine praxisorientierte Lösung der erfindungsgemäßen Lösung schematisch dargestellt. Diese zeigt einen Vierzylinder-Verbrennungsmotor mit drei Verbindungskanälen pro Zylinder und einen zwölfflutigen Abgasturbolader 2. Wie ersichtlich, sind jeweils zwei von drei Verbindungskanälen eines Verbrennungsraums mit einem Verschlusselement 5 versehen. Allgemeiner ausgedrückt, ist erfindungsgemäß vorgesehen, dass bei einer Anzahl von m Verbindungskanälen 4.1, 4.2 pro Verbrennungsraum mindestens m-1 und maximal m Verschlusselemente 5 vorgesehen sind. Die Maßgabe "maximal m" bringt dabei zum Ausdruck, dass, falls gewünscht und sinnvoll, auch jeder Verbindungskanal mit einem Verschlusselement 5 versehen sein kann. Dabei kann auch, wie vorerwähnt, vorgesehen sein (typischer Weise über eine weitere, hier nicht extra dargestellte Abgasanschlussschnittstelle), dass das Abgas zum Beispiel am Abgasturbolader 2 vorbei zum eigentlichen Auspuff des Verbrennungsmotors geleitet (gebypassed) wird.

Weiterhin ist bevorzugt vorgesehen, dass bei mehreren Verbrennungsräumen jeweils genau ein Verschlusselement 5 eines Verbrennungsraums zusammen mit jeweils genau einem Verschlusselement 5 der anderen Verbrennungsräume betätigbar ausgebildet ist. In Bezug auf Figur 3 bedeutet dies: Die Verbindungskanäle 4.1 sind, da sie kein Verschlusselement 5 aufweisen, stets geöffnet. Bei niedriger Leistung bzw. niedriger Drehzahl sind die übrigen Verschlusselemente 5 geschlossen. Wird nun die Drehzahl erhöht, besteht das Ziel der Erfindung darin, den Massenstrom pro Zufuhranschlussschnittstelle möglichst konstant zu halten, d. h. es wird erfindungsgemäß mindestens ein weiteres Verschlusselement 5 pro Verbrennungsraum geöffnet. Unter Volllast sind dementsprechend alle Verschlusselement 5 geöffnet, d. h. das Abgas wird verteilt über alle Verbindungskanäle 4.1, 4.2 zum Abgasturbolader 2 geleitet.

Wie ersichtlich, hat die Maßgabe, dass das Verschlusselement 5 in Abhängigkeit einer Drehzahl des Verbrennungsmotors verstellbar ausgebildet ist, zur Folge, dass der Impuls des Abgases erhalten bleibt und vom Abgasturbolader 2 besser genutzt werden kann, wobei gleichzeitig auf aufwändige, verstellbare Leitschaufeln am Abgasturbolader 2 verzichtet werden kann, worauf nachfolgend noch eingegangen wird. Wie eingangs bereits erläutert, sind erfindungsgemäß mindestens zwei Verbindungskanäle pro Verbrennungsraum erforderlich. Figur 3 zeigt eine Ausführungsform mit drei Verbindungskanälen pro Zylinder. Leicht vorstellbar sind auch noch vier Verbindungskanäle pro Zylinder; bei fünf und mehr Verbindungskanälen dürfte dann absehbar das Verhältnis zwischen Aufwand und Nutzen nicht mehr günstig sein, wenn gleich auch eine solche Lösung im Rahmen der Erfindung liegt.

Wie weiterhin aus den Figuren 1 und 3 ersichtlich, ist erfindungsgemäß vorgesehen, dass das Verschlusselement 5 in Erstreckungsrichtung des Verbindungskanals 4.1, 4.2 gesehen näher an der Abgasanschlussschnittstelle 1.1, 1.2 als an der Zufuhranschlussschnittstelle 3.1, 3.2 angeordnet ist. Diese Maßgabe hat den Vorteil, dass die Regelungskomponenten (insbesondere die Verschlusselemente 5 und die Stellglieder 7) zur Aufteilung des Abgasstroms aus dem Gehäuse des Abgasturboladers ausgelagert sind, was zur Kostensenkung und zur Erhöhung der Lebensdauer des Laders führt.

Ferner ist, wie bereits erwähnt, erfindungsgemäß vorgesehen, dass bei einer Anzahl von n Verbrennungsräumen mindestens 2*n Verbindungskanäle 4.1, 4.2 vorgesehen sind. Bezogen auf das Ausführungsbeispiel in Figur 3 ist konkret vorgesehen, dass vier Verbrennungsräume (n=4) mit insgesamt zwölf (also 3*n) Verbindungskanälen verbunden sind.

Um die Impulsenergie des Abgases, wie erwähnt, möglichst optimal nutzen zu können, ist weiterhin ein Durchströmquerschnitt des Verbindungskanals 4.1, 4.2 zwischen der Abgasanschlussschnittstelle 1.1, 1.2 und der Zufuhranschlussschnittstelle 3.1, 3.2 gleichbleibend ausgebildet, d. h. der Durchströmquerschnitt bleibt vorzugsweise auf die gesamte Länge des Verbindungskanals gleich groß.

Weiterhin ist, wie aus den Figuren ersichtlich, bevorzugt vorgesehen, dass eine Gesamtzahl an Abgasanschlussschnittstellen 1.1, 1.2 am Abgastrakt genau einer Gesamtzahl an Zufuhranschlussschnittstellen 3.1, 3.2 am Abgasturbolader 2 entspricht.

Bezüglich des Abgasturboladers 2, der erfindungsgemäß (und im Unterschied zum Verbrennungsmotor) zum Abgastrakt gehört und der wahlweise als Radial- (dargestellt) oder auch als Axialturbine (nicht dargestellt) ausgebildet sein kann, ist ferner bevorzugt vorgesehen, dass mittels eines zwischen der Zufuhranschlussschnittstelle 3.1, 3.2 und einem Laufrad 2.1 des Abgasturboladers 2 angeordneten Strömungskanals 6 ein unverändertlicher Anströmwinkel auf das Laufrad 2.1 festgelegt ist, wobei dieser (bezogen auf eine am Rand des Laufrades 2.1 positionierte Kreistangente) vorzugsweise zwischen 65° und 75°, besonders bevorzugt und wie dargestellt 70°, beträgt. Mit anderen Worten kann der erfindungsgemäße Abgasturbolader 2 leitschaufelfrei ausgebildet sein, wobei weiterhin zur Aufrechterhaltung der Impulsenergie bevorzugt vorgesehen ist, dass der Strömungskanal 6 den gleichen Durchströmquerschnitt aufweist wie der Verbindungskanal 4.1, 4.2.

Schließlich ist, zunächst allgemein ausgedrückt, bevorzugt vorgesehen, dass jeweils zu unterschiedlichen Verbrennungsräumen gehörende Verbindungskanäle 4.1, 4.2 zur gleichmäßigen Beaufschlagung des Turboladers 2 mit rotationssymmetrisch zur Drehachse eines Laufrads 2.1 des Abgasturboladers 2 angeordneten Zufuhranschlussschnittstellen 3.1, 3.2 verbunden ausgebildet sind. Bezogen auf das Ausführungsbeispiel gemäß Figur 3 bedeutet diese Maßgabe konkret, dass zum Beispiel die Verbindungskanäle des dritten Verbrennungsraums (von oben gezählt) um 180° versetzt zu den Verbindungskanälen des ersten Verbrennungsraums am Abgasturbolader 2 ausmündend ausgebildet sind. Das gleiche gilt entsprechend für die Verbindungskanäle bzw. Zufuhranschlussschnittstellen des zweiten und vierten Verbrennungsraums, wobei der konkrete Winkel offensichtlich davon abhängt, wieviele Verbrennungsräume der Verbrennungsmotor aufweist und wieviele Abgasanschlussschnittstellen pro Verbrennungsraum vorgesehen sind.

### Bezugszeichenliste

- 1.1: Abgasanschlussschnittstelle
- 1.2: Abgasanschlussschnittstelle
- 2: Abgasturbolader
- 2.1: Laufrad
- 3.1: Zufuhranschlussschnittstelle
- 3.2: Zufuhranschlussschnittstelle
- 4.1: erster Verbindungskanal
- 4.2: zweiter Verbindungskanal
- 5: Verschlusselement
- 6: Strömungskanal
- 7: Stellglied
- 8: Adapterelement

## Patentansprüche

1. Abgastrakt für einen Verbrennungsmotor, umfassend mindestens eine erste und eine zweite Abgasanschlussschnittstelle (1.1, 1.2) zur fluidisch getrennten Abfuhr von bei einem Verbrennungsprozess entstehendem Abgas aus einem Verbrennungsraum des Verbrennungsmotors und einen mindestens zweiflutig ausgebildeten Abgasturbolader (2), der zur fluidisch getrennten Zufuhr der beim Verbrennungsprozess entstehenden Abgase mindestens eine erste und eine zweite Zufuhranschlussschnittstelle (3.1, 3.2) aufweist, wobei ein erster Verbindungskanal (4.1) zur fluidischen Verbindung der ersten Abgasanschlussschnittstelle (1.1) mit der ersten Zufuhranschlussschnittstelle (3.1) und ein zweiter Verbindungskanal (4.2) zur fluidischen Verbindung der zweiten Abgasanschlussschnittstelle (1.2) mit der zweiten Zufuhranschlussschnittstelle (3.2) ausgebildet ist,
**dadurch gekennzeichnet,**
**dass** mindestens einer der Verbindungskanäle (4.1, 4.2) mindestens teilweise mittels eines Verschlusselements (5) verschließbar ausgebildet ist, wobei bei einer Anzahl von n Verbrennungsräumen mindestens 2*n Verbindungskanäle (4.1, 4.2) vorgesehen sind.

2. Abgastrakt für einen Verbrennungsmotor nach Anspruch 1,
**dadurch gekennzeichnet,**
**dass** bei einer Anzahl von m Verbindungskanälen (4.1, 4.2) pro Verbrennungsraum mindestens (m-1) und maximal m Verschlusselemente (5) vorgesehen sind.

3. Abgastrakt für einen Verbrennungsmotor nach Anspruch 1 oder 2,
**dadurch gekennzeichnet,**
**dass** bei mehreren Verbrennungsräumen jeweils genau ein Verschlusselement (5) eines Verbrennungsraums zusammen mit jeweils genau einem Verschlusselement (5) der anderen Verbrennungsräume betätigbar ausgebildet ist.

4. Abgastrakt für einen Verbrennungsmotor nach einem der Ansprüche 1 bis 3,
**dadurch gekennzeichnet,**
**dass** das Verschlusselement (5) in Abhängigkeit einer Drehzahl des Verbrennungsmotors verstellbar ausgebildet ist.

5. Abgastrakt für einen Verbrennungsmotor nach einem der Ansprüche 1 bis 4,
**dadurch gekennzeichnet,**
**dass** das Verschlusselement (5) in Erstreckungsrichtung des Verbindungskanals (4.1, 4.2) gesehen näher an der Abgasanschlussschnittstelle (1.1, 1.2) als an der Zufuhranschlussschnittstelle (3.1, 3.2) angeordnet ist.

6. Abgastrakt für einen Verbrennungsmotor nach einem der Ansprüche 1 bis 5,
**dadurch gekennzeichnet,**
**dass** ein Durchströmquerschnitt des Verbindungskanals (4.1, 4.2) zwischen der Abgasanschlussschnittstelle (1.1, 1.2) und der Zufuhranschlussschnittstelle (3.1, 3.2) gleichbleibend ausgebildet ist.

7. Abgastrakt für einen Verbrennungsmotor nach einem der Ansprüche 1 bis 6,
**dadurch gekennzeichnet,**
**dass** eine Gesamtzahl an Abgasanschlussschnittstellen (1.1, 1.2) am Abgastrakt genau einer Gesamtzahl an Zufuhranschlussschnittstellen (3.1, 3.2) am Abgasturbolader (2) entspricht.

8. Abgastrakt für einen Verbrennungsmotor nach einem der Ansprüche 1 bis 7,
**dadurch gekennzeichnet,**
**dass** jeweils zu unterschiedlichen Verbrennungsräumen gehörende Verbindungskanäle (4.1, 4.2) zur gleichmäßigen Beaufschlagung des Abgasturboladers (2) mit rotationssymmetrisch zur Drehachse eines Laufrads (2.1) des Turboladers (2) angeordneten Zufuhranschlussschnittstellen (3.1, 3.2) verbunden ausgebildet sind.

9. Abgastrakt für einen Verbrennungsmotor nach einem der Ansprüche 1 bis 8,
**dadurch gekennzeichnet,**
**dass** mittels eines zwischen der Zufuhranschlussschnittstelle (3.1, 3.2) und einem Laufrad (2.1) des Abgasturboladers (2) angeordneten Strömungskanals (6) ein unverändertlicher Anströmwinkel auf das Laufrad (2.1) festgelegt ist, wobei dieser vorzugsweise zwischen 65° und 75°, insbesondere 70°, beträgt.

## Claims

1. An exhaust gas system for an internal combustion engine, comprising at least one first and one second exhaust gas connection interface (1.1, 1.2) for fluidically separated discharge of exhaust gas arising during a combustion process from a combustion chamber of the internal combustion engine, and one at least dual-pipe exhaust gas turbocharger (2) having at least one first and one second supply connection interface (3.1, 3.2) for fluidically separated supply of the exhaust gases arising during the combustion process, wherein a first connecting channel (4.1) is designed for fluidic connection of the first exhaust gas connection interface (1.1) to the first supply connection interface (3.1), and a second connecting channel (4.2) is designed for fluidic connection of the second exhaust gas connection interface (1.2) to the second supply connection interface (3.2),
**characterized in that**
at least one of the connecting channels (4.1, 4.2) is designed to be at least partially closable by means of a closure element (5), wherein with a quantity of n combustion chambers, at least 2*n connecting channels (4.1, 4.2) are provided.

2. The exhaust gas system for an internal combustion engine according to Claim 1,
**characterized in that**
with a quantity of m connecting channels (4.1, 4.2) per combustion chamber, at least (m-1) and a maximum of m closure elements (5) are provided.

3. The exhaust gas system for an internal combustion engine according to Claim 1 or 2,
**characterized in that**
with several combustion chambers, respectively precisely one closure element (5) of one combustion chamber is constructed so as to be actuatable together with respectively precisely one closure element (5) of the other combustion chambers.

4. The exhaust gas system for an internal combustion engine according to one of Claims 1 to 3,
**characterized in that**
the closure element (5) is constructed so as to be adjustable as a function of a rotation speed of the internal combustion engine.

5. The exhaust gas system for an internal combustion engine according to one of Claims 1 to 4,
**characterized in that**
the closure element (5), viewed in the extent direction of the connecting channel (4.1, 4.2) is arranged nearer to the exhaust gas connection interface (1.1, 1.2) than to the supply connection interface (3.1, 3.2).

6. The exhaust gas system for an internal combustion engine according to one of Claims 1 to 5,
**characterized in that**
a through-flow cross-section of the connecting channel (4.1, 4.2) between the exhaust gas connection interface (1.1, 1.2) and the supply connection interface (3.1, 3.2) is constructed so as to be consistent.

7. The exhaust gas system for an internal combustion engine according to one of Claims 1 to 6,
**characterized in that**
a total number of exhaust gas connection interfaces (1.1, 1.2) at the exhaust gas system corresponds precisely to a total number of supply connection interfaces (3.1, 3.2) at the exhaust gas turbocharger (2).

8. The exhaust gas system for an internal combustion engine according to one of Claims 1 to 7,
**characterized in that**
connecting channels (4.1, 4.2) belonging respectively to different combustion chambers, for the uniform action upon the exhaust gas turbocharger (2) are constructed connected to supply connection interfaces (3.1, 3.2) which are arranged axially symmetrically to the rotation axis of a runner (2.1) of the turbocharger (2).

9. The exhaust gas system for an internal combustion engine according to one of Claims 1 to 8,
**characterized in that**
by means of a flow channel (6) arranged between the supply connection interface (3.1, 3.2) and a runner (2.1) of the exhaust gas turbocharger (2), an unchangeable angle of incidence onto the runner (2.1) is set, wherein the latter is preferably between 65° and 75°, in particular 70°.

## Revendications

1. Section de gaz d'échappement pour un moteur à combustion interne, comprenant au moins une première et une deuxième interface de raccordement de gaz d'échappement (1.1, 1.2) pour l'évacuation séparée fluidiquement d'un gaz d'échappement généré lors d'un processus de combustion hors d'une chambre de combustion du moteur à combustion interne et un turbocompresseur de gaz d'échappement (2) configuré au moins à double flux, qui présente pour l'alimentation séparée fluidiquement des gaz d'échappement générés lors du processus de combustion au moins une première et une deuxième interface de raccordement d'alimentation (3.1, 3.2), dans laquelle un premier canal de liaison (4.1) pour la liaison fluidique de la première interface de raccordement de gaz d'échappement (1.1) est configuré avec la première interface de raccordement d'alimentation (3.1) et un deuxième canal de liaison (4.2) pour la liaison fluidique de la deuxième interface de raccordement de gaz d'échappement (1.2) est configuré avec la deuxième interface de raccordement d'alimentation (3.2), **caractérisé en ce que** au moins un des canaux de liaison (4.1,4.2) est conçu de manière obturable au moins partiellement au moyen d'un élément d'obturation (5), dans lequel pour une pluralité de n chambres de combustion au moins 2*n canaux de liaison (4.1, 4.2) sont prévus.

2. Section de gaz d'échappement pour un moteur à combustion interne selon la revendication 1, **caractérisée en ce que** pour une pluralité de m canaux de liaison (4.1, 4.2) par chambre de combustion au moins (m-1) et au maximum m éléments d'obturation (5) sont prévus.

3. Section de gaz d'échappement pour un moteur à combustion interne selon la revendication 1 ou 2, **caractérisée en ce que** pour plusieurs chambres de combustion respectivement exactement un élément d'obturation (5) d'une chambre de combustion est conçue de manière à être actionnée conjointement à respectivement exactement un élément d'obturation (5) des autres chambres de combustion.

4. Section de gaz d'échappement pour un moteur à combustion interne selon une des revendications 1 à 3, **caractérisée en ce que** l'élément d'obturation (5) est réalisé de manière ajustable en fonction d'une vitesse de rotation du moteur à combustion interne.

5. Section de gaz d'échappement pour un moteur à combustion interne selon une des revendications 1 à 4, **caractérisée en ce que** l'élément d'obturation (5) vu dans la direction d'extension du canal de liaison (4.1,4.2) est disposée plus près de l'interface de raccordement de gaz d'échappement (1.1, 1.2) que de l'interface de raccordement d'alimentation (3.1, 3.2).

6. Section de gaz d'échappement pour un moteur à combustion interne selon une des revendications 1 à 5, **caractérisée en ce que** section transversale d'écoulement du canal de liaison (4.1, 4.2) est conçue de manière à rester constante entre l'interface de raccordement de gaz d'échappement (1.1, 1.2) et l'interface de raccordement d'alimentation (3.1, 3.2).

7. Section de gaz d'échappement pour un moteur à combustion interne selon une des revendications 1 à 6, **caractérisée en ce que** un nombre total des interfaces de raccordement de gaz d'échappement (1.1, 1.2) sur la section de gaz d'échappement correspond exactement à un nombre total des interfaces de raccordement d'alimentation (3.1, 3.2) sur le turbocompresseur de gaz d'échappement (2).

8. Section de gaz d'échappement pour un moteur à combustion interne selon une des revendications 1 à 7, **caractérisée en ce que** des canaux de liaison (4.1, 4.2) appartenant respectivement à différentes chambres de combustion en vue d'une sollicitation uniforme du turbocompresseur de gaz d'échappement (2) sont conçus en étant reliés avec des interfaces de raccordement d'alimentation (3.1, 3.2) disposées symétriquement en rotation par rapport à l'axe de rotation d'une roue (2.1) du turbocompresseur (2).

9. Section de gaz d'échappement pour un moteur à combustion interne selon une des revendications 1 à 8, **caractérisée en ce que** au moyen d'un canal d'écoulement (6) disposé entre l'interface de raccordement d'alimentation (3.1, 3.2) et une roue (2.1) du turbocompresseur de gaz d'échappement (2) un angle d'attaque invariable sur la roue (2.1) est déterminé, dans laquelle celui-ci est compris de préférence entre 65° et 75°, notamment s'élève à 70°.
